# EUROPÄISCHE PATENTSCHRIFT

(11) **EP 3 165 721 B1**
(45) Veröffentlichungstag und Bekanntmachung des Hinweises auf die Patenterteilung: **11.03.2020**
(21) Anmeldenummer: 16195526.5
(22) Anmeldetag: 25.10.2016
(51) Int. Cl.: F01L 1/047

(54) **NOCKENWELLE**
CAMSHAFT
ARBRE À CAMES

(30) Priorität: 06.11.2015 DE 102015221868
(43) Veröffentlichungstag der Anmeldung: 10.05.2017
(73) Patentinhaber: Mahle International GmbH, 70376 Stuttgart (DE)
(72) Erfinder: SCHACHERER, Roland, 78187 Geisingen (DE); UNRATH, Christoph, 73660 Urbach (DE)
(74) Vertreter: BRP Renaud & Partner mbB Rechtsanwälte Patentanwälte Steuerberater

(56) Entgegenhaltungen:
- EP-B1- 1 963 625
- DE-A1- 19 825 814
- DE-A1-102012 220 652
- US-A1- 2006 060 159

## Beschreibung

Die vorliegende Erfindung betrifft eine Nockenwelle mit einer rohrartigen Außenwelle und einer koaxial dazu angeordneten und zur Außenwelle zumindest begrenzt verdrehbaren Innenwelle gemäß dem Oberbegriff des Anspruchs 1. Die Erfindung betrifft außerdem eine Brennkraftmaschine mit zumindest einer solchen Nockenwelle.

Aus der EP 1 963 625 B1 ist eine gattungsgemäße Nockenwelle mit einer Außenwelle und einer koaxial dazu angeordneten und zur Außenwelle zumindest begrenzt verdrehbaren Innenwelle bekannt.

Aus der DE 10 2012 220 652 A1 ist wiederum eine Nockenwelle mit einer rohrartigen Außenwelle und einer koaxial dazu innen angeordneten und zur Außenwelle zumindest begrenzt verdrehbaren Innenwelle bekannt. Die Innenwelle besitzt einen hinsichtlich eines Außendurchmessers reduzierten Endabschnitt, über welchen die Innenwelle gegenüber der Außenwelle abgedichtet ist.

Aus der DE 198 25 814 A1 und der US 2006/060159 A1 sind weitere Nockenwellen bekannt.

Aufgrund der erforderlichen Freigängigkeit zwischen der Innenwelle und der Außenwelle bei einer verstellbaren Nockenwelle bzw. auch aufgrund einer erforderlichen Öldurchleitung für einen Phasensteller bzw. eine Lagerschmierung, wird üblicherweise zwischen der Innenwelle und der Außenwelle ein Ringspalt mit einer radialen Höhe von 0,2 mm bis 2 mm vorgesehen. Eine Abdichtung am Ende der beiden Wellen ist dabei erforderlich, um den für den Phasensteller erforderlichen Öldruck zwischen der Innenwelle und der Außenwelle aufbauen und halten zu können. Bei aus dem Stand der Technik bekannten Innenwellen sind diese bspw. im Bereich eines Dichtringes aufgedickt, was bspw. durch einen Materialabtrag auf fast der kompletten Länge der Innenwelle benachbart zum Dichtring erreicht werden kann. Dies ist jedoch vergleichsweise teuer.

Die vorliegende Erfindung beschäftigt sich daher mit dem Problem, für eine Nockenwelle der gattungsgemäßen Art eine verbesserte oder zumindest eine alternative Ausführungsform anzugeben, die sich insbesondere durch eine kostengünstigere und montagefreundlichere Abdichtung zwischen einer Innenwelle und einer Außenwelle auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Innenwelle an einem Endabschnitt abzudrehen, das heißt die Innenwelle in diesem Endabschnitt mit einem reduzierten Außendurchmesser zu versehen und nach dem Einbau in eine Außenwelle eine Abdichtung der innenwelle gegenüber der Außenwelle über diesen Endabschnitt vorzunehmen. Der hinsichtlich seines Außendurchmessers reduzierte Endabschnitt der Innenwelle kann dabei einstückig mit der Innenwelle oder als zusätzlicher Zapfen ausgebildet und mit der Innenwelle gefügt sein. Die erfindungsgemäße Nockenwelle weist dabei eine rohrartige Außenwelle sowie in montiertem Zustand die koaxial dazu angeordnete und zur Außenwelle zumindest begrenzt verdrehbare Innenwelle auf. Durch den hinsichtlich seines Außendurchmessers reduzierten Endabschnitt kann der Bearbeitungsaufwand der Innenwelle insbesondere im Vergleich zu aus dem Stand der Technik bekannten Innenwellen, bei welchen der gesamte Rest spanend bearbeitet werden musste, deutlich reduziert werden und zudem kann die Montage der erfindungsgemäßen Nockenwelle ebenfalls deutlich vereinfacht werden, da ein auf dem hinsichtlich seines Außendurchmessers reduzierten Endabschnitt angeordneter Dichtring beim Einschieben der Innenwelle in die Außenwelle nicht mit einer Innenmantelfläche der Außenwelle in Kontakt tritt und dadurch deutlich leichter und insbesondere auch ohne die Gefahr, den Dichtring zu beschädigen, eingeschoben werden kann. Eine Abdichtung der Innenwelle gegenüber der Außenwelle erfolgt dabei beispielsweise durch einen im Bereich des Endabschnitts der Innenwelle hinsichtlich seines Innendurchmessers reduzierten Endabschnitt der Außenwelle, wobei dieser Endabschnitt der Außenwelle bspw. durch Stauchen derselben, das heißt einstückig mit der Außenwelle ausgebildet werden kann, oder aber mittels eines zusätzlichen Bauteils, bspw. mittels eines Stopfens.

Bei einer vorteilhaften Weiterbildung der erfindungsgemäßen Lösung weist die Außenwelle zumindest eine radial nach innen ragende Ringstufe auf, über welche die Innenwelle gegenüber der Außenwelle abgedichtet ist. Demzufolge ist die Außenwelle lediglich in diesem mit dem Endabschnitt der Innenwelle in Kontakt stehenden Bereichen partiell aufgedickt, nämlich durch die radial nach innen ragende Ringstufe, wobei der Aufwand zur Herstellung dieser radialen Ringstufe bei der Herstellung der Außenwelle äußerst gering ist. Diese Ringstufe kann bspw. durch einen Umformprozess, insbesondere durch ein Stauchen oder während des Ziehens der Außenwelle durch Zugdruckumformen, hergestellt werden. Je nach radialer Dicke der erfindungsgemäßen Ringstufe ist diese sogar in der Lage, einen Dichtring, bspw. in einer entsprechenden Nut, aufzunehmen und zu lagern.

Bei einer vorteilhaften Weiterbildung der erfindungsgemäßen Lösung weist die Innenwelle eine nach außen offene Nut, insbesondere eine Umfangsnut, auf, in der ein Dichtring angeordnet ist, der bei montierter Nockenwelle auf axialer Höhe des Endabschnitts und insbesondere auch der zuvor beschriebenen Ringstufe angeordnet ist. Hierdurch ist es bspw. möglich, den Dichtring bereits auf dem hinsichtlich seines Außendurchmessers reduzieren Endabschnitt der Innenwelle vorzumontieren und anschließend in die zugehörige Außenwelle einzuschieben, wobei er erst im letzten Moment mit seinem hinsichtlich seines Innendurchmessers reduzierten Endabschnitt mit der Außenwelle in Kontakt tritt und dabei der Dichtring zwischen dem Endabschnitt der Außenwelle und dem Endabschnitt der Innenwelle eingeklemmt wird.

Erfindungsgemäß ist ein Stopfen vorgesehen, der längsendseitig in die Außenwelle eingreift und gegenüber welchem die Innenweite abgedichtet ist. Ein derartiger Stopfen stellt zwar im Vergleich zu einer einstückig mit der Außenwelle hergestellten Ringstufe ein separates Bauteil dar, ist jedoch vergleichsweise einfach, qualitativ hochwertig und auch kostengünstig zu fertigen. Der Stopfen umgreift einen Außenrand der Außenwelle.

Zweckmäßig kann der Stopfen fest mit der Außenwelle verbunden, insbesondere verpresst, verklebt, verschweißt oder verlötet sein. Bereits diese nicht abschließende Aufzählung lässt erahnen, welche mannigfaltige Befestigungsmöglichkeiten des Stopfens auf der Außenwelle gegeben sind.

Bei einer vorteilhaften Weiterbildung der erfindungsgemäßen Lösung weist die wenigstens eine Ringstufe gefaste Kanten auf. Derartige gefaste Kanten erleichtern ein Einschieben der Innenwelle und damit die Montage der Nockenwelle. Zusätzlich oder alternativ weist die Innenwelle an zumindest einem Ende eine Einfahrschräge auf, die ebenso ein Einschieben der Innenwelle in die Außenwelle bei der Montage der Nockenwelle erleichtert.

Zweckmäßig besitzt der Ringspalt zwischen Innenwelle und Außenwelle eine radiale Dicke von 0,2 bis 2,0 mm. Um ein genügendes Ölvolumen im Ringspalt vorhalten zu können, beispielsweise zur Schmierung von Gleitlagern bzw. zur Betätigung eines Phasenstellers, ist zwischen der Innenwelle und der Außenwelle der beschriebene Ringspalt vorgesehen. Der Ringspalt dient dabei insbesondere als Ölführung.

Weitere wichtige Merkmale und Vorteile der Erfindung ergeben sich aus den Unteransprüchen, aus den Zeichnungen und aus der zugehörigen Figurenbeschreibung anhand der Zeichnungen.

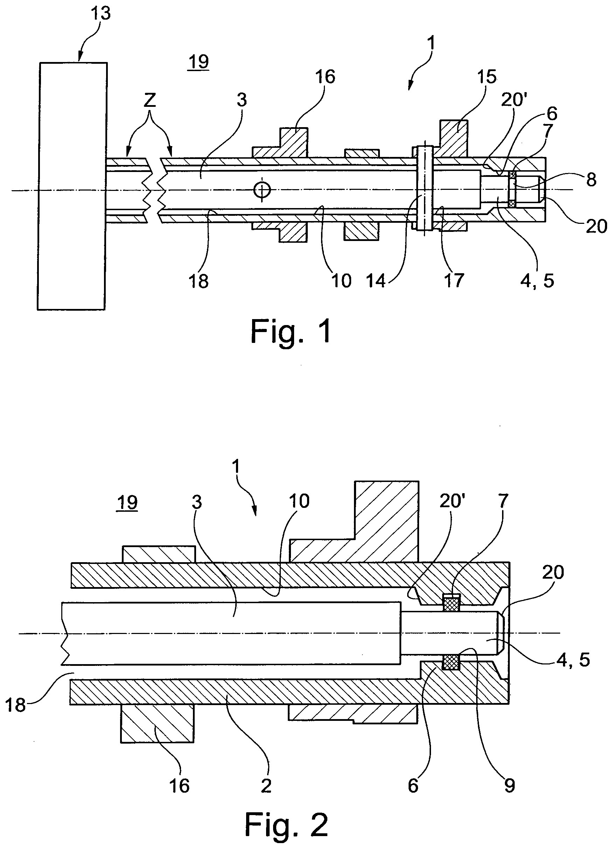

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.
Dabei zeigen, jeweils schematisch,
- Fig. 1: eine Schnittdarstellung durch eine erfindungsgemäße Nockenwelle,
- Fig. 2: ebenfalls eine Schnittdarstellung durch eine erfindungsgemäße Nockenwelle mit im Vergleich zur Fig. 1 verändertem Endabschnitt der Außenwelle,
- Fig. 3: eine Darstellung wie in Fig. 2, jedoch mit einem Stopfen,
- Fig. 4: eine Darstellung wie in Fig. 3, jedoch mit anderem Stopfen.
Entsprechend den Fig. 1 bis 4, weist eine erfindungsgemäße Nockenwelle 1 eine rohrartige Außenwelle 2 sowie eine koaxial dazu angeordnete und zur Außenwelle 2 zumindest begrenzt verdrehbare Innenwelle 3 auf. Erfindungsgemäß besitzt nun die Innenwelle 3 einen hinsichtlich seines Außendurchmessers reduzierten Endabschnitt 4, über welchen die Innenwelle 3 gegenüber der Außenwelle 2 abgedichtet ist. Dieser Endabschnitt 4 kann dabei entweder einstückig mit der Innenwelle 3 ausgebildet, bspw. durch eine spanende Bearbeitung, das heißt ein Abdrehen des Endabschnitts 4, hergestellt werden. Alternativ ist auch denkbar, dass der Endabschnitt 4 als separates Bauteil, nämlich als Zapfen 5 ausgebildet und mit der Innenwelle 3 fest verbunden, bspw. verklebt, eingepresst, verschweißt oder verlötet ist.

Betrachtet man die Fig. 1 und 2, so kann man erkennen, dass die Außenwelle 2 im Bereich des Endabschnitts 4 der Innenwelle 3 eine radial nach innen ragende Ringstufe 6 aufweist, über welche die Innenwelle 3 gegenüber der Außenwelle 2 abgedichtet ist. Hierbei ist zwischen der Innenwelle 3 und der Außenwelle 2 ein Dichtring 7 angeordnet.

Dieser Dichtring 7 kann dabei wahlweise in einer nach außen offenen Nut 8 der Innenwelle 3 angeordnet sein (vgl. Fig. 1) oder aber in einer nach innen offenen Nut 9 in der Außenwelle 2 (vgl. Fig. 2). Durch den reduzierten Außendurchmesser der Innenwelle 3 im Bereich des Endabschnitts 4 und die dortige Anordnung des Dichtrings 7 kann eine vereinfachte Montage der erfindungsgemäßen Nockenwelle 1 erreicht werden, da beim Einschieben der Innenwelle 3 in die Außenwelle 2 der Dichtring 7 zu keiner Zeit mit einer Innenmantelfläche 10 der Außenwelle 2 in Kontakt tritt und dort bspw. beim Überschieben über in der Außenwelle 2 vorgesehene Langlöcher verletzt werden kann. Das Herstellen des hinsichtlich seines Außendurchmessers reduzierten Endabschnitts 4 bzw. das Anbringen des Zapfens 5 an die Innenwelle 3 stellt zudem einen vergleichsweise einfachen und schnell durchführbaren Bearbeitungsschritt dar.

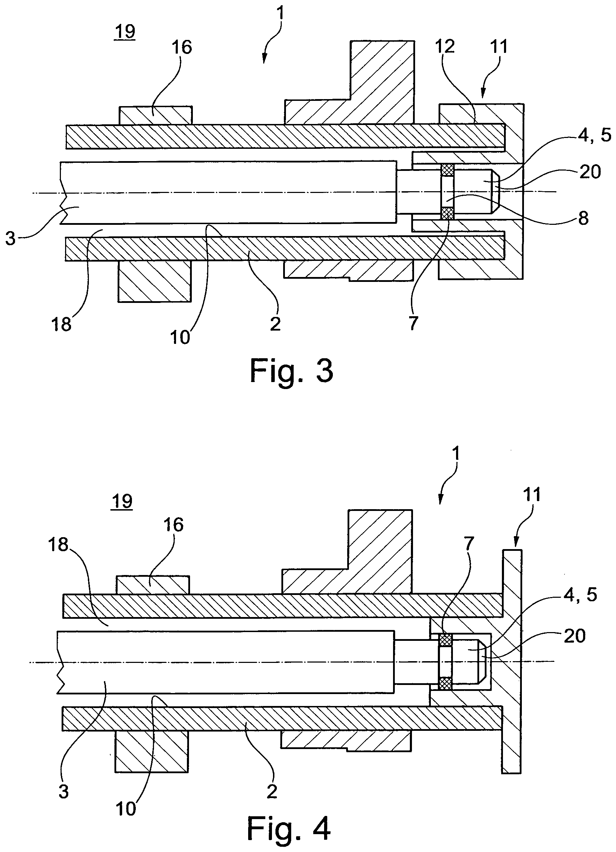

Betrachtet man die Fig. 3 und 4, so kann man erkennen, dass bei den dort gezeigten Nockenwellen 1 ein Stopfen 11 vorgesehen ist, der längsendseitig in die Außenwelle 2 eingreift und gegenüber welchem die Innenwelle 3 mit dem jeweiligen Dichtring 7 abgedichtet ist. Betrachtet man dabei den Stopfen 11 gemäß der Fig. 3, so kann man erkennen, dass dieser einen Außenrand 12 der Außenwelle 2 umgreift, wobei eine Befestigung des Stopfens 11 an/in der Außenwelle 2 bspw. mittels Verpressen, Verkleben, Verschweißen oder Verlöten erfolgen kann. Der Stopfen 11 gemäß der Figur 4 ist geschlossen ausgebildet, so dass in diesem Fall der Dichtring 7 auch als Lagerring genutzt werden kann.

Betrachtet man nochmals die Fig. 1, so kann man hier am linken Rand einen Phasensteller 13 erkennen, der in bekannter Weise zur Relativverdrehung der Innenwelle 3 zur Außenwelle 2 verwendet wird, wobei die Innenwelle 3 üblicherweise mittels eines Stiftes 14 drehfest mit einem ersten Nocken 15 und die Außenwelle 2 drehfest mit zumindest einem zweiten Nocken 16 verbunden ist. In der Außenwelle 2 ist dabei auf axialer Höhe des Stiftes 14 ein sich in Umfangsrichtung erstreckendes Langloch 17 vorgesehen, in welchem der Stift 14 bei einer Relativverdrehung der Innenwelle 3 zur Außenwelle 2 geführt ist.

Zur Versorgung des Phasenstellers 13 mit Öl, ist zwischen der Innenwelle 3 und der Außenwelle 2 ein Ringspalt 18 angeordnet, der an den dem Phasensteller 13 abgewandten Längsendbereich der Nockenwelle 1 mittels des Dichtrings 7 abgedichtet wird. Dieser Dichtring 7 wirkt dabei mit dem hinsichtlich seines Außendurchmessers reduzierten Endabschnitt 4 der Innenwelle 3 zusammen. Die Ringstufe 6 (vgl. die Fig. 1 und 2), kann bspw. durch einen Umformprozess, insbesondere durch ein Stauchen oder während des Ziehens der Außenwelle 2 durch ein Zugdruckumformen, vgl. einfach und kostengünstig hergestellt werden kann.

Betrachtet man den Dichtring 7, so ist dieser üblicherweise aus einem Kunststoff, insbesondere aus einem Elastomere oder einem Polytetrafluorethylen (PTFE) ausgebildet, wobei selbstverständlich auch metallische Dichtringe denkbar sind.

Der Dichtring 7 ist dabei in der Lage, dass chemische Milieu innerhalb der Nockenwelle 1 auch langfristig zu ertragen, ebenso wie die beim Betrieb einer auf die Nockenwelle 1 tragenden Brennkraftmaschine 19 auftretenden Temperaturen.

Betrachtet man den Endabschnitt 4 der Innenwelle 3 genauer, so kann man erkennen, dass dieser an einem freien Ende der Fase 20 aufweist, welche ein Einschieben der Innenwelle 3 in die Außenwelle 2 vereinfachen soll. Ebenso ist eine derartige Fase 20' bspw. im Bereich der Ringstufe 6 angeordnet (vgl. Fig. 1 und 2). Alternativ zu den gemäß den Fig. 3 und 4 gezeigten Stopfen 11 kann selbstverständlich auch eine nicht dargestellte Hülse verwendet werden, welche auf die Außenmantelfläche 12 der Außenwelle 2 aufgeschoben und dort fixiert wird und zugleich eine zentrale Bohrung aufweist, in welcher bei montierter Nockenwelle 1 der Endabschnitt 4 der Innenwelle 3 aufgenommen ist.

Generell kann mit der erfindungsgemäßen Nockenwelle 1 sowohl die Montage derselben vereinfacht als auch eine Dichtung eines Ringspalts 18 zwischen der Innenwelle 3 und der Außenwelle 2 kostengünstiger realisiert werden.

## Patentansprüche

1. Nockenwelle (1) mit einer rohrartigen Außenwelle (2) und einer koaxial dazu angeordneten und zur Außenwelle (2) zumindest begrenzt verdrehbaren Innenwelle (3), wobei die Innenwelle (3) einen hinsichtlich seines Außendurchmessers reduzierten Endabschnitt (4) aufweist, über welchen die Innenwelle (3) gegenüber der Außenwelle (2) abgedichtet ist, wobei zwischen der Innenwelle (3) und der Außenwelle (2) ein Dichtring (7) angeordnet ist,
**dadurch gekennzeichnet,**
- **dass** ein Stopfen (11) vorgesehen ist, der längsendseitig in die Außenwelle (2) eingreift und gegenüber welchem die Innenwelle (3) mit dem jeweiligen Dichtring (7) abgedichtet ist,
- **dass** der Stopfen (11) einen Außenrand (12) der Außenwelle (2) umgreift.

2. Nockenwelle nach Anspruch 1,
**dadurch gekennzeichnet,**
**dass** die Außenwelle (2) eine radial nach innen ragende Ringstufe (6) aufweist, über welche die Innenwelle (3) gegenüber der Außenwelle (2) abgedichtet ist.

3. Nockenwelle nach Anspruch 2,
**dadurch gekennzeichnet,**
**dass** die Außenwelle (2) im Bereich der Ringstufe (6) eine nach innen offene Nut (9) aufweist, in welcher der Dichtring (7) angeordnet ist.

4. Nockenwelle nach Anspruch 2 oder 3,
**dadurch gekennzeichnet,**
**dass** die Innenwelle (3) eine nach außen offene Nut (8) aufweist, in welcher der Dichtring (7) angeordnet ist, der bei montierter Nockenwelle (1) auf axialer Höhe der Ringstufe (6) angeordnet ist.

5. Nockenwelle nach Anspruch 1,
**dadurch gekennzeichnet,**
**dass** der Stopfen (11) fest mit der Außenwelle (2) verbunden, insbesondere verpresst, verklebt, verschweißt oder verlötet ist.

6. Nockenwelle nach einem der Ansprüche 1 bis 5,
**dadurch gekennzeichnet,**
**dass** der Dichtring (7) aus einem Elastomer oder aus Polytetrafluoretylen (PTFE) ausgebildet ist.

7. Nockenwelle nach einem der Ansprüche 2 bis 6,
**dadurch gekennzeichnet,**
- **dass** die Ringstufe (6) durch Umformen, insbesondere durch Stauchen, der Außenwelle (2) hergestellt ist, und/oder
- **dass** der Endabschnitt (4) spanend hergestellt ist.

## Claims

1. Camshaft (1) having a tubular outer shaft (2) and an inner shaft (3) which is arranged coaxially thereto and can be rotated at least to a limited extent with respect to the outer shaft (2), wherein the inner shaft (3) has an end section (4) with a reduced external diameter, the inner shaft (3) being sealed with respect to the outer shaft (2) at the end section, wherein a sealing ring (7) is arranged between the inner shaft (3) and the outer shaft (2),
**characterised in that**
- a plug (11) is provided which is inserted into the outer shaft (2) at the longitudinal end, the inner shaft (3) being sealed with respect to the plug by the sealing ring (7),
- the plug (11) engages around an outer edge (12) of the outer shaft (2).

2. Camshaft according to claim 1,
**characterised in that**
the outer shaft (2) has a radially inwardly projecting annular step (6), via which the inner shaft (3) is sealed with respect to the outer shaft (2).

3. Camshaft according to claim 2,
**characterised in that**
the outer shaft (2), in the region of the annular step (6), has an inwardly open groove (9) in which the sealing ring (7) is arranged.

4. Camshaft according to claim 2 or 3,
**characterised in that**
the inner shaft (3) has an outwardly open groove (8) in which the sealing ring (7) is arranged and which, when the camshaft (1) is mounted, is arranged at the axial height of the annular step (6).

5. Camshaft according to claim 1,
**characterised in that**
the plug (11) is fixedly connected, in particular pressed, glued, welded or soldered, to the outer shaft (2).

6. Camshaft according to any of claims 1 to 5,
**characterised in that**
the sealing ring (7) is formed from an elastomer or from polytetrafluoroethylene (PTFE).

7. Camshaft according to any of claims 2 or 6,
**characterised in that**
- the annular step (6) is manufactured by moulding, in particular by upsetting the outer shaft (2), and/or
- the end section (4) is manufactured by machining.

## Revendications

1. Arbre à cames (1) comprenant un arbre externe de forme tubulaire (2) et un arbre interne (3) agencé coaxialement à celui-ci et rotatif de manière au moins limitée par rapport à l'arbre externe (2), dans lequel l'arbre interne (3) présente une section d'extrémité (4) réduite vis-à-vis de son diamètre externe, via laquelle section l'arbre interne (3) est étanché par rapport à l'arbre externe (2), dans lequel est agencée une bague d'étanchéité (7) entre l'arbre interne (3) et l'arbre externe (2), **caractérisé en ce que** :
- il est prévu un bouchon (11) qui s'engage longitudinalement dans l'arbre externe (2) et vis-à-vis duquel l'arbre interne (3) est étanché avec la bague d'étanchéité respective (7),
- le bouchon (11) enserre un bord externe (12) de l'arbre externe (2).

2. Arbre à cames selon la revendication 1,
**caractérisé en ce que** :
l'arbre externe (2) présente un gradin annulaire (6) faisant saillie radialement vers l'intérieur et via lequel l'arbre interne (3) est étanché vis-à-vis de l'arbre externe (2).

3. Arbre à cames selon la revendication 2,
**caractérisé en ce que** :
l'arbre externe (2) présente dans le secteur du gradin annulaire (6) une rainure (9) ouverte vers l'intérieur dans laquelle est agencée la bague d'étanchéité (7).

4. Arbre à cames selon la revendication 2 ou 3,
**caractérisé en ce que** :
l'arbre interne (3) présente une rainure (8) ouverte vers l'extérieur dans laquelle est agencée la bague d'étanchéité (7) qui est agencée, dans l'arbre à cames monté (1), à hauteur axiale du gradin annulaire (6).

5. Arbre à cames selon la revendication 1,
**caractérisé en ce que** :
le bouchon (11) est solidement relié à l'arbre externe (2), en particulier comprimé, collé, soudé ou brasé.

6. Arbre à cames selon l'une quelconque des revendications 1 à 5,
**caractérisé en ce que** :
la bague d'étanchéité (7) est formée d'un élastomère ou de polytétrafluoroéthylène (PTFE).

7. Arbre à cames selon l'une quelconque des revendications 2 à 6,
**caractérisé en ce que** :
- le gradin annulaire (6) est fabriqué par façonnage, en particulier par refoulement, de l'arbre externe (2) et/ou
- la section d'extrémité (4) est fabriquée par usinage.
